**Europäisches Patentamt**

**European Patent Office**

**Office européen des brevets**

(19)

(11) Publication number : **0 466 460 A2**

# (12) EUROPEAN PATENT APPLICATION

(21) Application number : **91306224.6**

(22) Date of filing : **09.07.91**

(51) Int. Cl.⁵ : **B29D 7/01,** B29C 69/00

(30) Priority : **11.07.90 US 551558**

(43) Date of publication of application :
**15.01.92 Bulletin 92/03**

(84) Designated Contracting States :
**DE FR GB IT SE**

(71) Applicant : **MINNESOTA MINING AND MANUFACTURING COMPANY**
3M Center, P.O. Box 33427
St. Paul, Minnesota 55133-3427 (US)

(72) Inventor : **Kreun, Rhonda L., c/o Minnesota Mining and**
**Manufact. Co., 2501 Hudson Road, P.O. Box 33427**
**St. Paul, Minnesota 55133-3427 (US)**
Inventor : **Nystrom, Alan D., c/o Minnesota Mining and**
**Manufact. Co., 2501 Hudson Road, P.O. Box 33427**
**St. Paul, Minnesota 55133-3427 (US)**

(74) Representative : **Baillie, Iain Cameron et al**
c/o Ladas & Parry, Altheimer Eck 2
W-8000 München 2 (DE)

(54) **Method of making a flexible louvered plastic film.**

(57)   A flexible louvered plastic film can be produced from a laminate made by coextruding alternating clear and colored layers of thermoplastic resin, forming them into a cylindrical billet, skiving the billet at its cylindrical surface to produce a louvered film, and fusing the broad surfaces of the film to clarify those surfaces optically. The clear and colored layers can be coextruded in pairs which are then fused together, or a large proportion of all of the layers can be coextruded through a single die. The thermoplastic resin preferably is cellulose acetate butyrate.

Fig. 2

EP 0 466 460 A2

## Background of the Invention

### Field of the Invention

The invention concerns an economical method for making flexible louvered plastic films through which light can pass only within controlled angles of incidence. Such a light control film comprises a transparent synthetic resin incorporating tiny louver-like elements (sometimes called "microlouvers") which are distributed in light-screening or light-collimating fashion, e.g., parallel to each other and perpendicular to the surface of the film.

### Description of the Related Art

U.S. Pat. No. Re. 27,617 (Olsen) teaches a process of making a louvered light control film by skiving a billet of alternating layers of plastic having relatively lower and relatively higher optical densities. Upon skiving the billet, the pigmented layers provide light collimating louver elements, which, as illustrated in the patent, may extend orthogonally to the resulting louvered plastic film. The Olsen patent says:

"The primary laminate may be produced by any convenient means or, less conveniently, discs of clear and contrasting material can be used alternately. In the latter instance there is, however, more opportunity to obtain a distubed sequence, for example, of several clear discs superposed. Conveniently the primary laminate is prepared from an extruded film of thermoplast of one type by coating with a layer of contrasting type either by extrusion or other convenient process, e.g., rotogravure or other method of printing, vapor coating, etc." (Col. 2, lines 40-49)

"Slight irregularities in the knife-blade produced parallel longitudinal scoring of the skived film and together with other surface imperfections make the skived film translucent rather than transparent. In addition, there is a very slight curvature in the web resulting from the skiving which cuts a slightly shorter linear distance on each succeeding helix cut from the billet. Although this curvature is produced in the length of the web, an attempt to remove it longitudinally produces stresses such that the curvature appears transverse of the web. In other words, there is inherently a recognizable curvature to a skived web of polymer.

"These surfaces effects are corrected by pressing between polished flat plates under about 3.5 atmospheres pressure and above about 130°C., the softening point of the polymer, and cooling in contact with the polished surface. Other methods of molding the smooth surface are also applicable and smooth clear sheets of the same polymer or of glass may be laminated to the surface thereby providing flat sheets having cross-sections as shown in FIGS. 4 and 5 respectively." (Col. 7, lines 12-32.)

U.S. Pat. No. 3,922,440 (Wegwerth et al.) points out that because louvered plastic films "are thin sheet materials: (1) they are not by themselves capable of structurally withstanding extreme stresses and (2) they are subject to distortion from physical stress and temperatures" (Col. 1,. lines 19-22). Accordingly, as in Example 1 of the Wegwerth patent, the louvered plastic film usually is laminated under pressure between two clear plastic films of a material such as cellulose acetate butyrate, the material usually used in making louvered plastic films.

U.S. Pat. No. 4,764,410 (Grzywinski) teaches an alternative to the Wegwerth method. The alternative method includes the steps of (1) coating the skived louvered plastic film with a solventless monomer composition which polymerizes to an adhesive state upon exposure to ultraviolet radiation, (2) overlaying the monomer composition with a plastic film, and (3) exposing the coating to ultraviolet radiation to polymerize the composition to an adhesive state. After polymerization, the plastic liner which was placed over the monomer composition may be left in place to serve as protection for the louvered plastic film, or may be removed, leaving the polymerized composition exposed to act as a pressure-sensitive adhesive for bonding the film to other materials.

The alternative method is advantageous over the Wegwerth method in that it can be used in a continuous process rather than only in a batch process as is the case with the Wegwerth method. A disadvantage which is common to the alternative method and the Wegwerth method lies in the fact that the protective liners and skived louvered plastic film produce a laminate which is relatively stiff. In some applications, such as when the louvered plastic film is to cover a touch sensitive display screen, a more flexible film is desirable.

U.S. Pat. No. 4,766,023 (Lu) teaches that a louvered plastic film can be more easily handled and installed when coated with a monomer composition that can be polymerized by ultraviolet radiation to form an adhesive by which the louvered plastic film can be adhered to a supporting member such as a glass plate or a plastic sheet, e.g., a sheet of polycarbonate.

In spite of the above-quoted teaching in the Olsen patent, it is believed that every louvered plastic film that has appeared on the market has some sort of surface layers that both provide reinforcement and correct surface irregularities at the edges of the microlouvers. Included in commercial products are "Light Control Film (LCF)" produced by 3M Co. (to which the Olsen, Wegwerth, Grzywinski, and Lu patents are assigned). Louvered plastic films are also available from Shin-Etsu Polymer Co. Ltd., Japan and from Asahi Kasei Kogyo KK, Japan.

In UK Pat. Appl. GB 2,173,736A published Oct. 22, 1986 (Tahara et al.), "transparent and colored silicone rubber compounds are each shaped into thin sheets by a suitable sheeting method and the sheets are stacked in an alternate stratification of transparent silicone rubber sheets 1 and colored silicone rubber sheets 2 to form a stratified block 3 ..." (p. 1, lines 103-109). The Olsen reissue patent says that the laminates can be "prepared from an extruded film of thermoplast of one type by coating with a layer of contrasting type either by extrusion or other convenient process, e.g., rotogravure or other method of printing, vapor coating, etc." (col. 2, lines 45-49). Notwithstanding these statements in the Tahara application and the Olsen patent, it is believed that the laminates or billets from which almost all commercial louvered plastic films are skived have been made by alternately coating clear and colored layers from solutions or emulsions.

## Summary of the Invention

The invention provides a method for making a flexible louvered plastic film that, as compared to the methods disclosed in the above-cited patents, requires fewer steps and hence is more economical, while avoiding any offsetting disadvantages. The resulting louvered plastic film is optically equal or superior to products of the above-cited patents and also can be handled and put to use with very little danger of damage.

Briefly, the method of the invention entails the steps of:

a) coextruding a large number of thermoplastic resin layers of alternating low and relatively high optical densities,

b) forming the coextruded layers into a billet having a cylindrical surface intersected by each of the layers,

c) skiving the billet at said cylindrical surface to produce a thin transparent film incorporating a large number of microlouvers of relatively high optical density, and

d) fusing the broad surfaces of the film, thus optically clarifying those surfaces. Even though the resulting transparent louvered plastic film has no surface layers, it is so tough that it can be folded upon itself without breaking.

Preferably, the layers of low optical density are clear. The layers of relatively high optical density can be opaque (optical densities greater than 3) or translucent (optical densities of from 0.5 to 2). Typically, the opacity or translucency is imparted by pigments such as carbon black, but dyes can be used as disclosed in U.S. Pat. No. 4,128,685 (Lowrey). The opaque or translucent layers are often called "colored" to distinguish them from "clear" layers.

By coextruding clear and colored layers in step a), the novel method

1) produces a louvered plastic film of such integrity that it does not need reinforcing surface layers before being handled and put to use,

2) avoids contamination between the coextruded layers, and

3) affords excellent control of the thickness of the layers.

As compared to producing layers by coating from solution, substantially no volatiles are evolved.

To ensure strong interlaminar adhesion, all of the layers preferably comprise the same thermoplastic resin, ideally cellulose acetate butyrate because it is inexpensive, easy to extrude and mold, skivable without chatter at moderately elevated temperatures, flexible and tough, and it has excellent transparency. Other useful thermoplastic resins include cellulose acetate propanate and plasticized acrylic resins. Polycarbonate would be excellent but must be heated to undesirably high temperatures to be skivable without chatter. When the clear and colored layers comprise differing thermoplastic resins, those thermoplastic resins should be selected to become strongly bonded to each other when coextruded, e.g., alternating layers of cellulose acetate butyrate and cellulose acetate propanate.

In step a) of the novel method, the clear and colored layers can be coextruded in pairs, and the pairs can be trimmed and fused together to form a cylindrical billet. Instead, a large number of the clear and colored layers can be coextruded. By coextruding the layers of the entire billet through a single die, there is greater assurance of avoiding interlaminar contamination, and there is the added economy of eliminating the step of fusing coextruded pairs to form the billet. Because a billet typically contains from 2000 to 5000 layers, a single die to coextrude that many layers may be unduly expensive, so that it may be desirable to coextrude from 1 to 10 percent of the layers and to fuse the resulting laminates to provide the billet.

Step c) of the novel method preferably is performed in the same manner as in the prior art. For example, as taught in the Olsen reissue patent, the billet preferably is rotatably mounted on a shaft, and while being rotated, the billet is skived by a knife edge that extends parallel to the shaft, which knife edge is continuously advanced toward the shaft until the billet has been substantially completely exhausted.

In step d), the rough skived surface of the web can be optically clarified by being continuously passed between a pair of heated rolls (hot cans) while applying sufficient pressure to the web to ensure complete contact. By beginning to skive a second billet before the first is exhausted, a flying splice can be made between the beginning end of the second web and the trailing end of the first web, thus resulting in a substantially continuous louvered plastic film of the invention which can be wound into long rolls for convenient storage and shipment.

The louvered plastic film produced by the novel method can have attributes possessed by louvered plastic films described in the above-cited patents. For example, its colored microlouvers can extend in a direction normal to the plane of the web; or they can extend generally oblique to the plane of the web and substantially parallel to each other as taught in U.S. Pat. No. 3,707,416 (Stevens); or they can have a gradual change in the angle of cant to the surface of the web as taught in U.S. Pat. No. 3,919,559 (Stevens).

For most purposes, the clear layers that are coextruded in step a) should be from 5 to 20 times the thickness of the colored layers. At substantially lower ratios, the microlouvers might unduly interfere with the transmission of light, and at substantially higher ratios, the microlouvers might be relatively ineffective. For most uses, the clear layers should have a uniform thickness of from 50 to 300 μm.

To afford an optical density of at least 3, each of the colored layers preferably has a thickness of at least 5 μm. On the other hand, if the thickness of each colored layer were substantially greater than 20 μm, they might unduly interfere with the transmission of light.

## Brief Description of the Drawing

The invention may be more easily understood in reference to the drawing, all figures of which are schematic. In the drawing:

FIG. 1 illustrates apparatus for producing laminates that can be formed into a cylindrical billet;

FIG. 2 illustrates apparatus by which a web obtained by skiving the cylindrical billet can be passed between hot cans to fuse the broad surfaces of the web; and

FIG. 3 illustrates apparatus alternative to that of FIG. 2.

## Description of the Preferred Embodiments

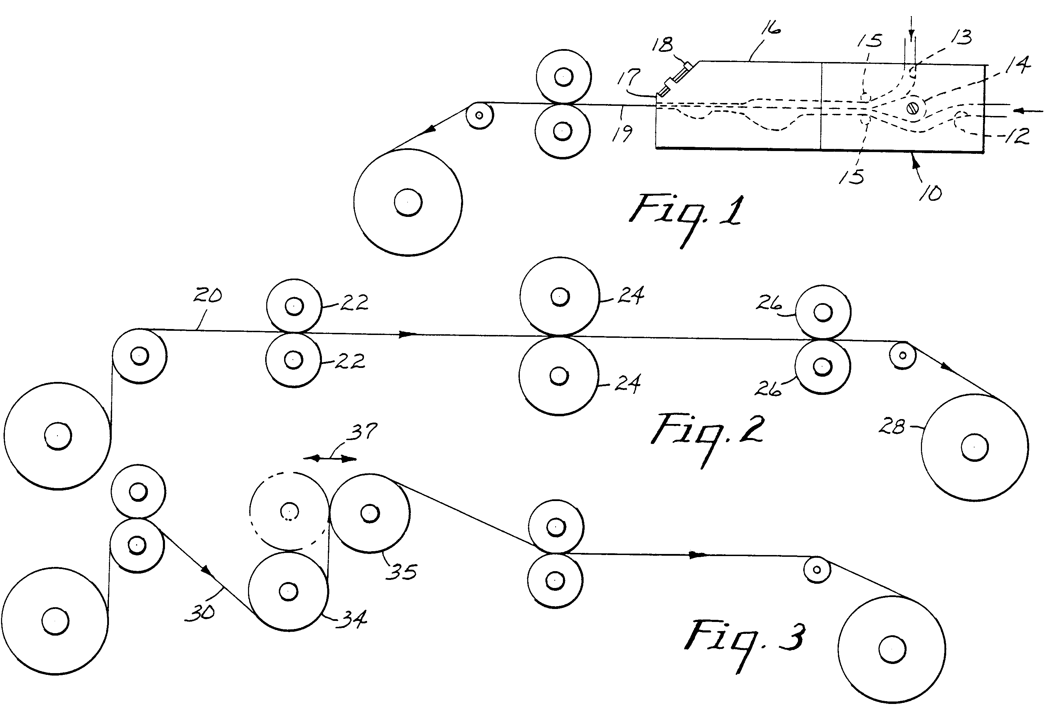

In FIG. 1, an adjustable feed block 10 is formed with a first input channel 12 for clear resin and a second input channel 13 for pigmented resin. An adjustable vane 14 and distribution pins 15 provide the desired proportional relationship between the clear and pigmented resins. From the feed block, the resins are fed into an extrusion die 16, one lip 17 of which is adjustable by a row of bolts 18 so that the extruded laminate 19 has the desired uniform thickness.

A large number of the 2-layer laminates 19 are trimmed and formed into a cylindrical billet which is shirred to form a louvered film that is wound up into a roll, this being done by known techniques that are not illustrated here.

In FIG. 2, a roll of the louvered film 20 is unwound and fed between a pair of heated nip rolls 22 to preheat the film and then into a nip between a pair of hot cans 24, each having a surface temperature sufficient to fuse the faces of the louvered film. After passing between chill rolls 26, the louvered film is wound up into a roll 28.

The apparatus of FIG. 3 is identical to that of FIG. 2 except that instead of passing a louvered film 30 into a nip between hot cans, the film is passed alternately over first and second hot cans 34 and 35. The second hot can 35 is movable as indicated by arrows 37 to increase or decrease the length of contact with the hot cans. As compared to the apparatus of FIG. 2, that of FIG. 3 should permit substantially greater line speeds.

## Example 1

Portions of clear and pigmented (5 percent carbon black by weight) cellulose acetate butyrate were dried at 71 degrees C for four hours in a desiccant dryer. They were then coextruded in apparatus of FIG. 1 with the final heating zone at 218 degrees C to produce a stream of 10:1 clear resin to pigmented resin which was passed laminarly through a coat-hanger extrusion sheet die and made uniformly thick by use of adjustment bolts on one die lip. The formed sheet was then passed through a set of cooling rolls to solidify the resulting 2-layer laminate to approximately 0.134 mm thick. The laminate was wound into a roll at the end of the extrusion line.

The laminate was punched to form 282 mm dia. disks with a 70 mm dia. center hole that were placed one at a time onto a steel shaft until 3000 disks had been stacked together. An 292 mm metal shell was placed around a stack of sheets, and 220N of spring force is applied against end plates of the stack. This fixture was placed in a forced air oven set at a maximum temperature of 152 degrees C for about 48 hours. The resulting solid cylindrical billet was removed from the fixture and placed on a machining lathe to which a skiving knife has been attached. The billet was rotated and heated to a surface temperature of 121 degrees C while the knife was gradually turned into the billet, thus skiving off a louvered plastic film that was nominally 0.3 mm thick. This film was pressed between mirror-smooth, chrome-plated steel plates at 149 degrees C and 550 MPa, thus clarifying the rough surface. The resulting louvered plastic film had a viewing angle of 60 degrees at complete cut-off of light with 77 percent transmission of light normal to the film, and the microlouvers were perpendicular to the broad surfaces of the film.

## Comparison Test

A louvered plastic film (here called "Comparative Example A") was identical to that of Example 1 except in the preparation of 2-layer laminate which was made by extruding a film of clear cellulose acetate butyrate and coating it with aqueous dispersion of a pigmented acrylic resin. When grouping the louvered plastic film of Comparative Example A between an edge of ones fingers, it was easily torn along the microlouvers, whereas that of Example 1 could not be torn. The louvered plastic film of Comparative Example A broke before it could be folded upon itself along its microlouvers, whereas that of Example 1 could be folded upon itself with difficulty but did not break.

## Example 2

In the procedure of Example 1 except using a pigmented cellulose acetate butyrate resin having only 2 percent pigment (carbon black), a light control film is formed that allows about 10 percent of the total light to pass through the microlouvers at cut-off.

## Claims

1. A method of making a flexible louvered plastic film, said method comprising the steps of:
   a) coextruding a large number of thermoplastic resin layers of alternating low and relatively high optical densities,
   b) forming the coextruded layers into a billet having a cylindrical surface intersected by each of the layers,
   c) skiving the billet at said cylindrical surface to produce a thin transparent film incorporating a large number of microlouvers of relatively high optical density, and
   d) fusing the broad surfaces of the film, thus optically clarifying those surfaces.

2. Method as defined in Claim 1 wherein all of the layers comprise the same thermoplastic resin.

3. Method as defined in Claim 2 wherein said same thermoplastic resin comprises cellulose acetate butyrate.

4. Method as defined in Claim 1 wherein the layers which are coextruded in step a) and have low optical density are clear, and those of relatively high optical density are colored.

5. Method as defined in Claim 4 wherein the clear layers are from 5 to 20 times the thickness of the colored layers.

6. Method as defined in Claim 5 wherein the clear layers have a uniform thickness of from 50 to 300 μm.

7. Method as defined in Claim 5 wherein the colored layers have a uniform thickness of from 5 to 20 μm.

8. Method as defined in Claim 4 wherein the clear and colored layers are coextruded in step a) in pairs, and step b) comprises trimming and fusing a large number of the pairs to form the billet.

9. Method as defined in Claim 1 wherein step d) comprises passing the web between a pair of heated rolls while applying sufficient pressure to ensure complete contact.

10. A transparent louvered plastic film incorporating a large number of microlouvers of relatively high optical density, which film has two major surfaces with the microlouvers terminating at said surfaces, said louvered plastic film being characterized by the feature that it can be folded along its louvers without breaking.

Fig. 1

Fig. 2

Fig. 3

EP 0 466 460 A2